# EUROPÄISCHE PATENTSCHRIFT

(11) **EP 0 310 947 B1**
(45) Veröffentlichungstag und Bekanntmachung des Hinweises auf die Patenterteilung: **07.04.1993**
(21) Anmeldenummer: 88116108.7
(22) Anmeldetag: 29.09.1988
(51) Int. Cl.: B03B 9/06

(54) **Vorrichtung zum Zerkleinern, Waschen, Entwässern, Separieren und Trocknen von verschmutztem Material**
Device for crushing, washing, draining, separating and drying polluted material
Dispositif pour broyer, laver, égoutter, séparer et sécher des matières polluées

(30) Priorität: 05.10.1987 DE 3733649
(43) Veröffentlichungstag der Anmeldung: 12.04.1989
(73) Patentinhaber: EMAS ENTSORGUNGSMASCHINEN UND ANLAGEN-SERVICE GMBH, D-51149 Köln (DE)
(72) Erfinder: Siebert, Hans-Joachim Dipl.-Ing.,, D-5060 Bergisch Gladbach 1 (DE); Herd, Peter, D-3200 Hildesheim (DE)
(74) Vertreter: Freischem, Werner, Dipl.-Ing.

(56) Entgegenhaltungen:
- EP-A- 0 155 681
- DE-A- 1 461 453
- DE-A- 2 352 884
- DE-A- 2 730 978
- KUNSTSTOFFE, Band 77, Nr. 8, August 1987, Seiten 737-741, München, DE; S. BEYER et al.: "Zerkleinern und Waschen von Kunststoffen"

## Beschreibung

Die Erfindung betrifft eine Vorrichtung zum Zerkleinern, Waschen, Entwässern, Separieren und Trocknen von verschmutztem Material, insbesondere von Kunststoffolien, Kunststoffbechern, Kunststoffverpackungen jeder Art.

Die Entsorgung von derartigem Material, das als Hausmüll und auch als Industriemüll anfällt, bereitet immer größere Schwierigkeiten, weil das Material zumeist verschmutzt ist und sich deshalb in dieser Form nicht dazu eignet, als Regenerat wiederverwendet zu werden. So wird man beispielsweise Joghurtbecher aus Kunststoff, die noch Speisereste enthalten, nicht in eine Schneidvorrichtung geben, da diese in kurzer Zeit verschmutzt und damit unbrauchbar gemacht würde.

Eine Verkleinerung der durch solches Material gebildeten Müllberge durch Verbrennung sollte besonders dann nicht erfolgen, wenn dabei gesundheitsschädliche oder in sonstiger Weise die Umwelt belastende Verbrennungsprodukte entstehen.

Man hat zur Beseitigung derartigen Materials bereits sehr umfangreiche und aufwendige Entsorgungsanlagen gebaut. Diese Anlagen sind aber wegen ihrer Größe und ihres Preises nicht geeignet, die vorstehend genannten Probleme zu lösen und haben den Nachteil, daß alle langfaserigen, streifenförmigen Materialien sich an drehenden Anlagenteilen aufwickeln und somit den Prozeß empfindlich stören oder zum Erliegen bringen.

In der EP-A 0 155 681 ist ein Verfahren zum Reinigen von Kunststoffteilchen, insbesondere von verschmutzten vorzerkleinerten Kunststoff-Folienabfällen, beschrieben, bei dem insbesondere eine Rotationsmühle verwendet wird mit radialem Rotor und gegenüberliegendem Stator. Ferner ist eine Anlage zur Durchführung dieses Verfahrens beschrieben, in der die Kunststoffteilchen zerkleinert, entwässert, separiert und getrocknet werden. Diese Anlage weist ein Silo, eine Waage, die Rotationsmühle, mehrere Sichtbehälter, eine Trockenvorrichtung, Siebförderer und eine Pumpe auf und ist daher sehr aufwendig.

Der Erfindung liegt die Aufgabe zugrunde, eine wirkungsvolle, wenig aufwendige und kompakte Vorrichtung der eingangs genannten Art zu schaffen.

Diese Aufgabe wird durch die kennzeichnenden Merkmale von Anspruch 1 gelöst.

In Ergänzung dazu wird vorgeschlagen, daß sich an das Entwässern des zerkleinerten Materials eine Heißlufttrocknung anschließt. Man erhält dann je nach dem entweder abgetropfte Teile des gereinigten Materials oder aber vollständig getrocknete Teile, die sich dann sofort weiterverarbeiten lassen. Sofern es sich bei dem Material um thermoplastische Kunststoffe handelt, könnte man diese wieder einschmelzen. Es bietet sich aber auch der Weg, ein Gemenge verschiedenen Materials, das mit der Vorrichtung behandelt wurde, einer Wärmebehandlung und Pressung zu unterziehen, wobei dann die thermoplastischen Kunststoffe in diesem Gemenge schmelzen und das gesamte Gemenge zusammenhalten. Man kann dann daraus beispielsweise Pflasterplatten für Fußwege, Distanzstücke oder dergleichen herstellen. Außerdem lassen sich unterschiedliche Kunststoffsorten, die nach dem Trocknen mit Hilfe einer Schneidmühle auf eine homogene Körnung gemahlen werden, im Schwimm-Sink-Verfahren voneinander trennen und stehen danach der verarbeitenden Industrie wieder zur Verfügung.

Dabei ist es besonders vorteilhaft, daß eine neue Tauchpumpenart eingesetzt wird, die durch ihre konstruktiven Merkmale speziell langfaserige und streifenförmige Materialien zerkleinert, wäscht und fördert, ohne jemals zu verstopfen.

Die Erfindung wird nachstehend in zwei Ausführungsbeispielen einer solchen Vorrichtung anhand der Zeichnung näher erläutert. Dabei zeigen
- Fig. 1: eine teilweise geschnittene Draufsicht auf die nach oben offene Vorrichtung, geschnitten längs der Linie I-I in Fig. 2;
- Fig. 2: einen Schnitt längs der Linie II-II in Fig. 1;
- Fig. 3: einen Schnitt längs der Linie III-III in Fig. 2;
- Fig. 4: einen vergrößerten Teilschnitt längs der Linie IV-IV in Fig. 1;
- Fig. 5: einen noch stärker vergrößerten Teilschnitt längs der Linie V-V in Fig. 1;
- Fig. 6: einen Schnitt durch eine abgewandelte Ausführungsform, ähnlich der Darstellung in Fig. 3, und
- Fig. 7: einen Schnitt längs der Linie VII-VII in Fig. 6, wiederum ähnlich der Darstellung in Fig. 2.

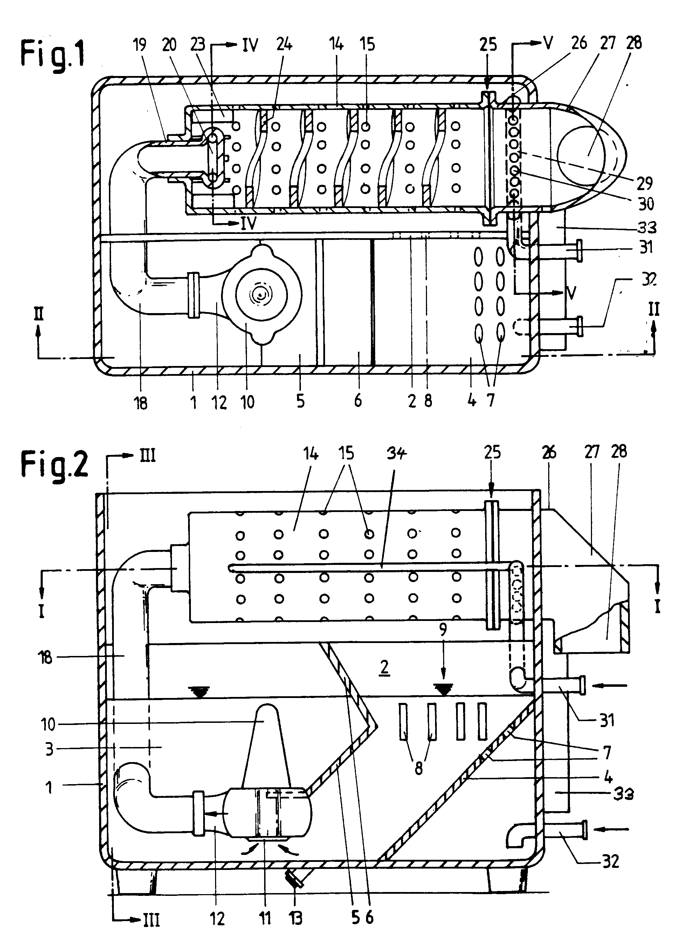

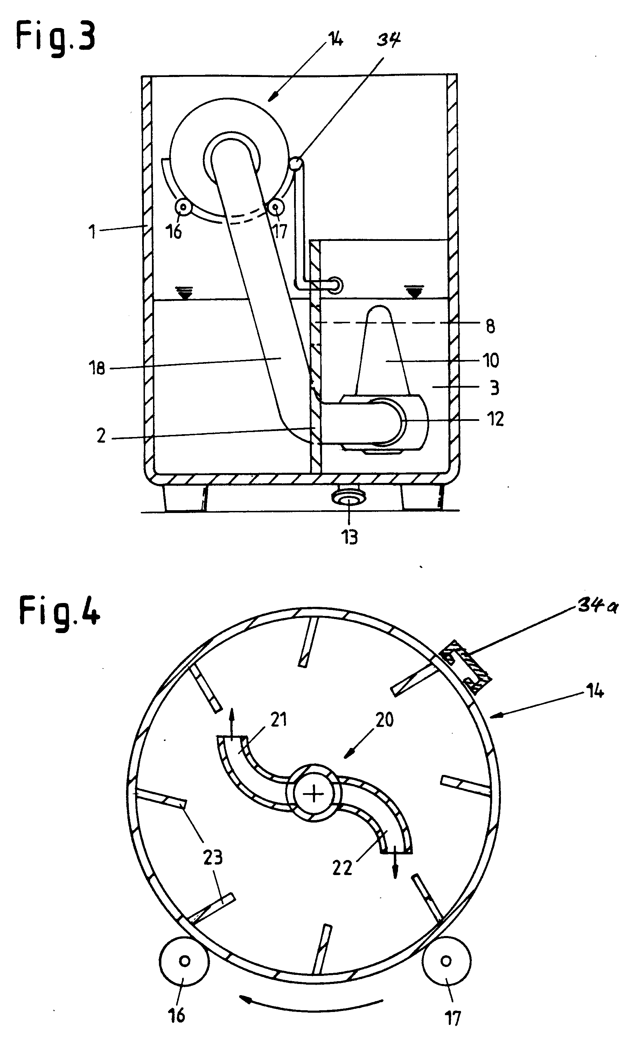

Die in den Fig. 1 bis 5 dargestellte Vorrichtung umfaßt ein oben offenes Gehäuse 1 mit einer dieses bis knapp zur halben Höhe durchziehenden Trennwand 2. Das Gehäuse 1 ist in seinen beiden Kammern bis zu einer in den Fig. 2 und 3 angedeuteten Höhe mit Wasser gefüllt. Der Zulauf erfolgt durch einen Rohrstutzen 32 in der Nähe des Gehäusebodens und wird durch einen nicht dargestellten Niveaufühler und ein von diesem gesteuertes, ebenfalls nicht dargestelltes Ventil auf der gewünschten Höhe gehalten.

Der Ausgleich zwischen den beiden Kammern erfolgt durch Öffnungen 8 in der Trennwand 2.

Wie man aus Fig. 2 erkennt, ist in die eine der beiden Kammern eine von einer Seitenwand schräg abwärts verlaufende Wand 4 sowie im Abstand von dieser eine weitere schräge Wand 5 eingebaut, die einen schräg abwärts verlaufenden Kanal bilden. Die Wand 5 ist an ihrem oberen Ende nach der entgegegesetzten Seite abgeknickt und bildet somit, gemeinsam mit der Wand 4, einen Einfülltrichter für das Material. Die vorgenannten Schlitze 8 in der Trennwand 2 befinden sich im oberen Teil dieses Trichters.

In der mit dem besagten Trichter versehenen Abteilung befindet sich ferner eine Tauchpumpe 10 mit einer unteren Ansaugöffnung 11 und einem seitlich abgehenden Auslaß 12, an den sich ein noch zu beschreibendes Verbindungsrohr 18 anschließt.

Die Tauchpumpe ist unterhalb des Wasserspiegels und derart innerhalb der Kammer angeordnet, daß das durch den Trichter eingeworfene und nach unten gleitende Material in die Nähe der Ansaugöffnung 11 gelangt und dort von der Pumpe erfaßt und eingesaugt wird.

Die Pumpe ist mit einem oder mehreren feststehenden Zerkleinerungsmessern (nicht dargestellt) versehen und schneidet die eingezogenen Teile des Materials in kleine Stücke, die dann mit dem austretenden Wasserstrom in das Verbindungsrohr 18 gedrückt werden.

Oberhalb der Tauchpumpe und seitlich versetzt zu der die Tauchpumpe aufnehmenden Kammer befindet sich eine mit Löchern 15 versehene, drehbar gelagerte Trommel 14.

Auf der einen Seite dieser Trommel ragt ein mit dem Verbindungsrohr 18 kommunizierender feststehender Einlaßstutzen 19 durch einen flüssigkeitsdichten Flansch in die Trommel hinein. Innerhalb der Trommel trägt dieser Einlaßstutzen einen Verteiler 20 mit zwei radial nach außen abgehenden und an ihren Enden abgebogenen Rohrstutzen 21 und 22 (siehe Fig. 4).

Das zerkleinerte Material gelangt mit dem Wasserstrom durch den Einlaßstutzen 19 in die beiden Rohrstutzen 21 und 22 und trifft auf Schaufeln 23, die an der Innenseite der Trommel befestigt sind und in diese hineinragen.

Die beiden aus den Rohrstutzen austretenden Wasserströme, beladen mit zerkleinertem Material, treffen auf die vorgenannten Schaufeln auf und setzen dadurch die Trommel, die außen durch Rollen 16 und 17 frei drehbar gelagert ist, in Richtung des Pfeiles in Fig. 4 in Bewegung.

Im Inneren der Trommel befindet sich außerdem ein von ihrem Mantel etwa radial einwärts ragender, die Trommel schraubenlinienförmig in axialer Richtung durchziehender Steg 24 (siehe Fig. 1), der, sofern man entsprechend die richtige Drehrichtung vorgesehen hat, das vom Wasserstrom mitgeführte zerkleinerte Material in axialer Richtung zum anderen Ende der Trommel fördert. Die Trommel ist an ihrem anderen Ende ebenfalls gelagert (nicht dargestellt) und flüssigkeitsdicht, wie bei 25 nur schematisch angedeutet, mit einem anschließenden zylindrischen Auslaufstutzen 26 verbunden. Dieser Auslaufstutzen steht fest und nimmt das entwässerte Material auf, da der dieses bis in die Trommel hinein fördernde Wasserstrom durch die Löcher im Umfang der Trommel nach unten abgelaufen ist.

Der Auslaufstutzen 26 geht über einen abgewinkelten Teil 27 in einen vertikalen Teil 28 über. Das entwässerte und zerkleinerte Material kann dort entnommen bzw. weitergefördert werden.

Es sei noch erwähnt, daß sich auch in der schrägen Trichterwand 4 im oberen Teil einige Öffnungen 7 befinden, um einen Flüssigkeitsausgleich zu ermöglichen.

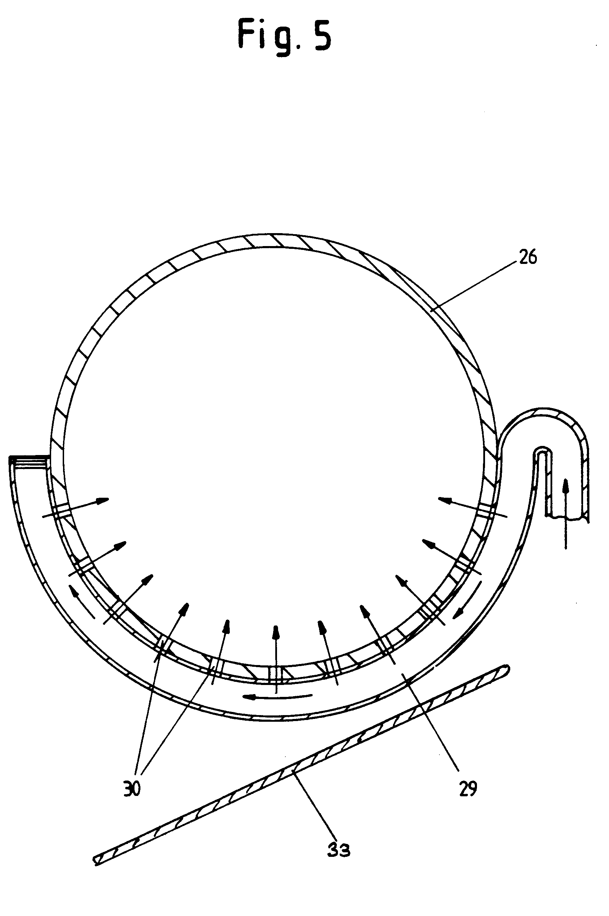

Im Auslaufstutzen 26 befindet sich, diesen unterseitig halbkreisförmig umgebend, ein Rohr 29 (siehe Fig. 5), das radial einwärts gerichtete Düsenöffnungen 30 besitzt. In den mit diesem Rohr verbundenen Stutzen 31 (Fig. 1 und 2) wird Druckluft eingeführt, die, wie durch die Pfeile in Fig. 5 angedeutet, durch entsprechende Öffnungen im Auslaufstutzen 26 in dessen Innenraum gelangen und dort eine Windsichtung des von der Trommel abgegebenen Materials vornehmen. Die spezifisch leichteren Teile, beispielsweise Kunststoffstücke, werden durch die Luftstrahlen in die Mitte des Auslaufstutzens 26 getrieben und gelangen von dort in den senkrechten Teil 28 des Auslaufstutzens, während die spezifisch schwereren Teile, also Metallteile, Steine und dergleichen, nicht durch die Luftstrahlen angehoben und weitergefördert werden, sondern über (nicht eingezeichnete) Öffnungen im unteren Teil des Auslaufstutzens 26 und eine Rutsche (32) (Fig. 1, 2 und 5) nach außen gelangen und somit von den übrigen Teilen des Materials separiert werden.

Außerhalb der Trommel 14 verläuft in Höhe der Trommelachse und parallel zu dieser (Fig. 2 und Fig. 3) ein Rohr 34, das auf der der Trommel zugewandten Seite mit Öffnungen versehen ist. Das Rohr ist an seinem in Fig. 2 linken Ende geschlossen und wird von seinem rechten Ende her mit Druckluft gespeist. Die Luftstrahlen gelangen bei Drehung der Trommel 14 durch deren Öffnungen 15 und verhindern, daß Materialteile am inneren Umfang der Trommel 14 hängenbleiben. Bei der Ausführung nach Fig. 2 und Fig. 3 ist dieses Rohr 34 an seinem (in Fig. 2 rechten) Ende an das Rohr 29 angeschlossen, das den Auslaufstutzen 26 am Trommelende halbkreisförmig umgibt.

Eine andere Ausbildung dieses Rohres 34a mit rechteckigem Querschnitt ist in Fig. 4 dargestellt und befindet sich dort schräg oberhalb der Trommelachse.

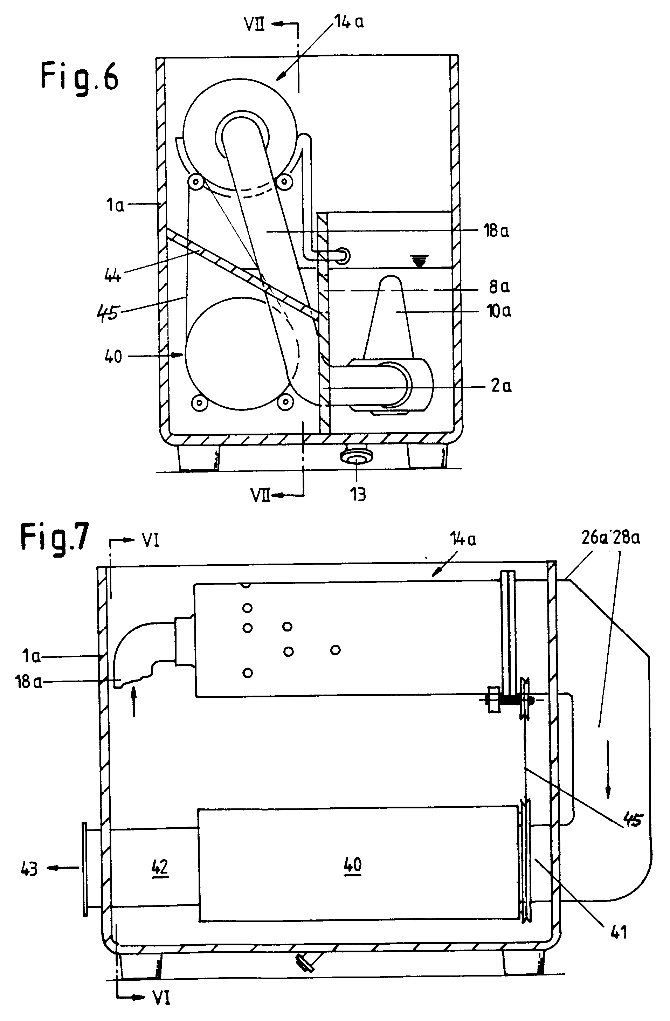

Bei der abgewandelten Ausführung nach den Fig. 6 und 7 befindet sich wiederem innerhalb eines oben offenen Behälters 1a eine Trennwand 2a und ein (nicht dargestellter) Einfülltrichter sowie eine Tauchpume 10a, die durch ein schräg aufwärts geführtes Verbindungsrohr 18a mit der Eingangsseite einer drehbaren und mit Löchern versehenen Trommel 14a verbunden ist.

Auf der Ausgangsseite dieser Trommel befindet sich wieder ein feststehender Auslaufstutzen 26a, der in einen vertikalen Teil 28a übergeht. Dieser vertikale Teil ist unterseitig mit einem horizontalen Rohrstutzen 41 verbunden, der in eine schematisch angedeutete, mit Heißluft gespeiste Trockentrommel 40 führt.

Das dort vollständig getrocknete Material wird über einen Auslaufstutzen in Richtung des Pfeiles 43 abgegeben und kann dann noch von dem Heißluftstrom in einem nicht dargestellten Windabscheider separiert werden. In diesem Falle wird man den Heißluftstrom vorzugsweise zurückführen, um Energie zu sparen. Die Trockentrommel im unteren Bereich der Anlage wird durch Zahnrad, Reibrad oder Keilriemen von der oberen Siebtrommel mit angetrieben und hat durch Einbau von Schikanen die Möglichkeit, die Verweilzeit des Materials in der Trommel zu beeinflussen (siehe Fig. 6 und Fig. 7). Bei dem Ausführungsbeispiel gemäß Fig. 6 und 7 folgt die Übertragung durch einen Keilriemen 45 von einer der Lager- und Antriebsrollen der Trommel 14a über eine (nicht bezeichnete) Keilriemenscheibe auf eine mit der Trockentrommel drehfest verbundene (nicht bezeichnete) Keilriemenscheibe.

Die Erzeugung und Führung eines solchen Heißluftstromes und die Einleitung in die Trockentrommel ergeben sich aufgrund der an sich bekannten Techniken von selbst.

Sofern das in den Einfülltrichter eingegebene Material schwere Teile oder auch Schlamm oder dergleichen enthält, kann dieser sich am Boden des Behälters absetzen und von Zeit zu Zeit durch Öffnen eines dort vorgesehenen Stutzens (13 in Fig. 2 und 3 bzw. in Fig. 6) abgelassen werden.

## Patentansprüche

1. Vorrichtung zum Zerkleinern, Waschen, Entwässern, Separieren und Trocknen von verschmutztem Material, gekennzeichnet durch einen mit einem Wasserzulauf versehenen Behälter (3), der bis auf eine bestimmte Höhe mit Wasser füllbar ist, eine im Behälter befindliche, mit einem oder mehreren Zerkleinerungmessern versehene Tauchpumpe (10), deren Ansaugöffnung (11) in der Nähe des Bodens des Behälters (3) liegt, einen das verschmutzte Material aufnehmenden und in die Nähe der Ansaugöffnung (11) der Tauchpumpe (10) führenden Einfülltrichter (4,6), eine oberhalb der Höhe des einzufüllenden Wassers horizontal angeordnete, drehbare, mit Öffnungen (15) in ihrem Mantel versehene Trommel (14), ein Verbindungsrohr (18) zwischen dem Auslaß der Tauchpumpe (10) und einem in die Trommel einführenden, feststehenden Einlaßstutzen (19) sowie einen an den Auslaß der Trommel (14) angesetzten Auslaßstutzen (26,27,28) für das zerkleinerte, gewaschene und entwässerte Material.

2. Vorrichtung nach Anspruch 1, dadurch gekennzeichnet, daß die Trommel (14) einen von ihrem Mantel etwa radial einwärts ragenden, die Trommel (14) schraubenlinienförmig in axialer Richtung durchziehenden, zur Materialförderung dienenden Steg (24) aufweist.

3. Vorrichtung nach Anspruch 1 oder 2, dadurch gekennzeichnet, daß auf dem Einlaßstutzen (19) mindestens ein das Gemisch aus Wasser und zerkleinertem Material in Umlaufrichtung leitender Rohrstutzen (21,22) angebracht ist und auf der Innenseite der Trommel (14) im Wege des einströmenden Gemischs Schaufeln (23) zum Antrieb der Trommel (14) angeordnet sind.

4. Vorrichtung nach einem der Ansprüche 1 bis 3, gekennzeichnet durch Öffnungen (7,8) im oberen Teil der Wände (4,6) des Einfülltrichters.

5. Vorrichtung nach einem der Ansprüche 1 bis 4, dadurch gekennzeichnet, daß am Auslaß der Trommel (14) ein feststehender Auslaufstutzen (26) angeschlossen ist, der an seiner Unterseite mit an eine Druckluftleitung (29,31) angeschlossenen, halbkreisförmig angeordneten und radial zur Mittelachse des Auslaufstutzens (26) gerichteten Düsen (30) versehen ist und in Förderrichtung hinter diesen Düsen (30) im unteren Teil des Auslaßstutzens (26) eine Öffnung und darunter eine Rutsche (33) zum Abführen schwererer Teile angeordnet sind.

6. Vorrichtung nach einem der Ansprüche 1 bis 5, dadurch gekennzeichnet, daß in einem mittels Trennwänden (2a,44) abgetrennten Bereich des Behälters (1) eine der Trommel (14) nachgeschaltete, mit Heißluft gespeiste Trockentrommel (40) angeordnet ist.

7. Vorrichtung nach Anspruch 6, dadurch gekennzeichnet, daß die Trockentrommel (40) von der Trommel (14,14a), vorzugsweise über Keilriemen (45), angetrieben ist.

8. Vorrichtung nach Anspruch 6 oder 7, gekennzeichnet durch einen der Trockentrommel (40) nachgeschalteten Windabscheider zur Separierung des Materials vom Heißluftstrom.

9. Vorrichtung nach einem der Ansprüche 1 bis 8, gekennzeichnet durch ein außerhalb der Trommel (14), achsparallel zu dieser und mindestens in Höhe der Trommelachse angeordnetes, feststehendes Rohr (34,34a), das auf seiner der Trommel zugewandten Seite mit Öffnungen versehen und an eine Druckluftleitung (31) angeschlossen ist.

10. Vorrichtung nach einem der Ansprüche 1 bis 8, gekennzeichnet durch eine außerhalb der Trommel (14), achsparallel zu dieser und in Höhe mindestens der Trommelachse frei drehbar gelagert angeordnete Bürstenwalze, die bei Drehung der Trommel (14) von dieser angetrieben wird und deren Borsten in die Öffnungen (15) der Trommel (14) eingreifen.

## Claims

1. Device for comminution, washing, dewatering, separating and drying of contaminated material, qualified by a container (3), provided by a water over-rim supply, which is up to a certain height fillable with water; a - in the container located - submersible pump (10) provided with one or several cutting knifes, which suction opening (11) is located close to the bottom of the container (3); a filling hopper (4, 6), taking the contaminated material and guiding it close to the suction opening (11) of the submersible pump (10); a rotating, with openings (15) in it's shell provided drum (14), placed horizontal above the height of the filling water level; a connecting pipe (18) between the outlet of the submersible pump (10) and one in the drum guiding, fixed inlet socket (19) as well as an outlet socket (26, 27, 28) added at the outlet of the drum (14), for the comminuted, washed and dewatered material.

2. Device according to claim 1, thereby qualified, that the drum (14) shows a material conveying web (24), projecting from it's shell about radial inwards, through pulling the drum (14) screw line shaped in axial direction.

3. Device according to claim 1 or 2, thereby qualified, that on the inlet socket (19) at least one, the mix out of water and comminuted material in rotating direction guiding pipe socked (21, 22) is fixed and on the inside of the drum (14), in the way of the instreaming mix, blades (23) for the drive of the drum (14) are placed.

4. Device according to one of the claims 1 to 3, qualified by openings (7, 8) in the upper part Of the walls (4, 6) of the filling hopper.

5. Device according to one of the claims 1 to 4, thereby qualified, that at the outlet of the drum (14), a fixed outlet socket (26) is connected, which is at it's rear side provided with nozzles (30) which are connected with a compressed air pipe, half-circle placed and radial directed towards the middle-axle of the outlet socket (26), and in conveying direction after these nozzles (30) in the lower part of the outlet socket (26), an opening and underneath a chute (33) for carrying out of heavier parts are placed.

6. Device according to one of the claims 1 to 5, thereby qualified, that in a - by means of parting walls - separated area of the container (1) a the drum (14) topped, with hot air feeded, drying drum (40) is provided.

7. Device according to claim 6, thereby qualified, that the drying drum (40) from the drum (14, 14a), is preferably driven by V-belts (45).

8. Device according to claim 6 or 7, qualified by one, the drying drum (40) topped air separator to separate the material from the hot air stream.

9. Device according to one of the claims 1 to 8, qualified by a fixed pipe (34, 34a) placed outside the drum (14), axle-parallel thereto and at least placed in the height of the drum axle, which at it's side towards the drum is provided with openings and is connected with a compressed air pipe (31).

10. Device according to one of the claims 1 to 8, qualified by a outside the drum (14), axle-parallel thereto and at least in the height of the drum-axle, free rotating mounted on bearings placed brushing roller, which is driven by the rotation of the drum (14) and which bristles mesh into the openings (15) of the drum (14).

## Revendications

1. Equipement destiné au découpage, lavage, égouttage, séparation et séchage de matières souillées, caractérisé par un réservoir (3) avec canal d'alimentation d'eau, remplissable jusqu'à un certain niveau par une pompe immergée (10) pourvue d'un ou de plusieurs couteaux et sont l'orifice d'entrée (11) se trouve à proximité du plancher du réservoir (3), une goulotte d'alimentation (4, 6) recueillant les matières souillées et les amenant près de l'orifice d'entrée (11) de la pompe immergée 810), un tambour (14) rotatif et horizontal dont les parois sont percées des ouvertures (15), situé au-dessous de la surface de l'eau, une conduite de liaison (18) entre la sortie de la pompe immergée (10) et la buse d'alimentation fixe du tambour (19) ainsi qu'une canalisation en sortie (26, 27, 28) de tambour pour l'évacuation des matières découpées, lavées, égouttées.

2. Equipement d'après revendication (1) caractérisé par le fait que le tambour (14) présente une hélice (24) disposée radialement à la paroi du tambour (14) et décrivant un mouvement hélicoidal vers l'avant en direction axial permettant de faire avancer les matières.

3. Equipement d'après revendication 1 ou 2 caractérisé par le fait qu'au moins une conduite est montée (21, 22) sur la buse d'alimentation (19) véhiculant le mélange eau-matière découpée en décrivant un mouvement circulaire et qu'à l'intérieur du tambour (14) des aubes (23) sont disposées en opposition aux affluents et servant à imprimer un mouvement au tambour (14).

4. Equipement d'après l'une des revendications 1 à 3 caractérisé par les ouvertures (7, 8) pratiquées à la partie supérieure des parois (4, 6) du canal d'alimentation.

5. Equipement d'après l'une des revendications 1 à 4 caractérisé par le fait qu'un orifice de sortie (26) fixe est disposé à la sortie du tambour (14) pourvu à sa partie inférieure de buses (29, 31) disposées en demi-arc de cercle et radialement par rapport à l'axe de l'orifice de sortie et que dans le sens du mouvement, derrière ces buses (30) à la partie inférieure de l'orifice de sortie (26) une ouverture et un plan incliné (33) sont disposes pour l'évacuation des parties lourdes.

6. Equipement d'après l'une des revendications 1 à 5 caractérisé par le fait que dans un compartiment séparé du réservoir (1) par le moyen de cloisons de séparation (2a, 44) un tambour de séchage (40) alimenté par de l'air chaud est disposé et solidaire du tambour (14).

7. Equipement d'après revendication 6 caractérisé par le fait qu le tambour de séchage (40) est animé par le tambour (14, 14a) de préférence à l'aide d'une courroie de transmission (45).

8. Equipement d'après revendication 6 ou 7 caractérisé par un déviateur de flux commandé par le tambour de séchage (40) pour séparer la matière du courant d'air chaud.

9. Equipement d'après l'une des revendications 1 à 8 caractérisé par une conduite fixe (34, 34a) à l'extérieur du tambour (14), parallèle à son axe et située au moins à la hauteur du tambour et pourvue d'ouvertures disposées en regard de la paroi du tambour et abouchée à une arrivée d'air comprimé (31).

10. Equipement d'après l'une des revendications 1 à 8 caractérisé par un bala rouleau tournant librement placé à l'extérieur du tambour (14) parallèle à son axe et au moins à la hauteur de l'axe de celui-ci. Ce balai dont les poils s'appliquent à travers les ouvertures (15) pratiquées dans le tambour (14) est entraîné par la rotation du tambour (14).
